(19) Europäisches Patentamt

European Patent Office

Office européen des brevets

(11) **EP 1 049 006 A2**

(12) **EUROPEAN PATENT APPLICATION**

(43) Date of publication:
**02.11.2000 Bulletin 2000/44**

(51) Int Cl.⁷: **G06F 9/445**, G06F 17/60

(21) Application number: **00303163.0**

(22) Date of filing: **14.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.04.1999 GB 9908782**

(71) Applicant: **eMisis InfoCom Group Plc**
**Dublin 2 (IE)**

(72) Inventors:
• **Elias, David Michael Alexander**
**Dublin 4 (IE)**
• **Macklin, Neal**
**Saratoga, California 95070 (US)**

(74) Representative:
**Wright, Howard Hugh Burnby et al**
**Withers & Rogers,**
**Goldings House,**
**2 Hays Lane**
**London SE1 2HW (GB)**

(54) **Transfer of electronic messages to a PDA**

(57) Techniques for enhancing the operation of a personal digital assistant (PDA) including the automatic downloading, installation and execution of software which modifies the functionality of the PDA and for techniques intercepting e-mail messages sent to the PDA which include commands which modify the functionality of the PDA. Also described are methods of ensuring that information is correctly directed to a user including via a PDA.

EP 1 049 006 A2

Printed by Jouve, 75001 PARIS (FR)

**Description**

The present invention relates to the transfer of electronic messages to a PDA.

Recently, the so-called Personal Digital Assistant (PDA) has appeared on the market. This is a compact device with a keyboard or other data entry device, display means and processing means. PDAs are usually provided with word processing, diary, database and spreadsheet applications and may be connectable to a telephone system for dialing telephone numbers using the DTMF system and perhaps for sending and receiving data using modem or fax protocols. Usually, PDAs are connectable to a microcomputer using either a connecting cable or an infra red transceiver to allow the transfer of files between the PDA and microcomputer.

More recently, PDAs have been integrated with mobile telephones. An example of such a product is the Nokia 9000 Communicator which incorporates a GSM mobile telephone with a PDA and is designed for use in Europe. Similar products are becoming available in North America and Asia. These integrated devices provide similar functionality to a PDA connected to a mobile telephone using a modem. In the subsequent description, the term 'PDA' is used to mean an integrated device as described in this paragraph or a device providing similar functionality. Thus, as used below, the term 'PDA' may be defined as a device or combination of devices operable as a telephone and having additional customizable computing functions, the device or combination respectively being portable.

According to a first aspect of the invention a method of altering software in a PDA comprises receiving at the PDA a software module via a text data transmission, the transmission including an identifier unique to the module, extracting the identifier from the message, comparing the identifier with the identifiers of modules already present in the PDA, and if a module having the received identifier is already present, deleting the existing module from memory having that identifier and replacing that module in memory with the received module.

Preferably, if a module having the received identifier is not already present, a new module is added to the telephone based on the contents of the received module. Thus new software functionality may be added to the telephone by transmitting a new module (having a new identifier).

Typically, a module will be transmitted using SMS and will be larger than the 160 byte limit of that transmission standard. Thus the module is split at the transmitting end into several parts (advantageously using the technique described below). Thus at the telephone end, the module is received in several parts and the telephone is arranged to acknowledge receipt of each part, to correctly order each part in relation to the other parts, to request re-transmission of missing parts, and to prevent loading of the module into memory until all parts of the module have been received. The latter requirement being included to ensure that incomplete modules are not executed by the telephone.

Typically, modules are linked to one another so that one module may use a function provided by another module. Also, modules may cause the creation of user interface elements on display of the telephone. Before a module is deleted (either to be replaced by a new module or by an explicit deletion command received at the telephone), links from other programmes are removed and user interface elements are removed. Any new links or user interface elements required by a new or replacement module are then re-created when the new module has been completely received and loaded into memory for execution.

Advantageously, software modules may be provided which interact with the software which controls the cellular network side of the PDA. For example, the software module may access the identity of the current cell to which the phone is logged in (cell broadcast information). This enables the module to discover the location of the user which may in turn be used to modify operation of the software module to provide geographically sensitive information to the user. Similarly, many mobile telephones monitor the signal strength of adjacent cell base stations (typically 3 base stations) and this information (in conjunction with transmission powers and base station locations) may be used to provide a triangulation estimate for the position of the user between base stations.

As described below, the modules may be transmitted to the PDA using E-mail One disadvantage of this is that at present, the user must instigate a connection to the E-mail source. Preferably, a software module may cause the PDA to dial the E-mail source periodically so that information may be received by E-mail as well as SMS transmissions.

According to a second aspect of the invention apparatus for directing electronic messages comprises control means, database means and message direction means, the database means being arranged to store a plurality of method records for a respective user each such record being associated with a particular method of contacting the user and each including contact data, the control means being arranged to identify an incoming message as being for a particular user, choose a method record for that user, access the contact data of that method record and cause the message direction means to direct the incoming message to the receiver and in the message format specified in the contact data.

Preferably the control means is arranged to choose a method record according to itinerary information held in the database means which maps method records for a particular user to predetermined respective days and/or times of the day.

The control means may be arranged to choose method records according to a predetermined priority designation which orders the method records of a particular user into a priority-ordered list, a subsequently listed method record being chosen if the contact method specified in the previously listed method record fails to permit contact to be made with the user.

Advantageously, the control means is arranged to identify an incoming acknowledgement of a previously directed message and to delete the message from a message queue so that no further attempts are made to direct the message to the user.

Preferably the control means is arranged to divide large messages into packets and to use different contact methods for different packets. The packets are preferably reordered at the receiving end to construct the complete message. The integrity of the data is preferably insured using low level error correction and detection protocols.

Thus, where there is a preferred method of data delivery as well as one or more alternative methods, when the destination cannot be reached by the preferred method an alternative method is selected and the data is re-sent. This process can be repeated many times using different delivery methods such as analogue modems, TCP/IP Internet connections, SMTP-based E-mail, SMS, fax, alphanumerical paging, numeric paging, or additional methods as they become available.

In the prior art, a sender must know a delivery address in some format. In accordance with the invention, since multiple delivery addresses are held for specific delivery methods, these can be used as needed to reach a destination delivery address without the sender's intervention. Additionally, new destination addresses and methods can be added without disrupting in-progress services.

According to a third aspect of the invention a method of intercepting E-mail messages received by a PDA comprising periodically reading a mail directory of the PDA containing received E-mail messages, searching for a unique identifier in the read messages, and for each read message which contains the identifier removing that message from the list so that it is not seen by the PDA user.

Preferably, the identifier of the removed message is compared with a list of recently received identifiers and if a match is found the message related to that identifier is deleted.

Preferably, if a match is not found, the message relating to the identifier is added to a linked list of messages and a part number value of the message is examined which part number identifies the order and total number of message parts which form a complete transaction, if the complete transaction is contained in the link list, the messages are ordered to form the complete transaction and the transaction is processed, the transaction parts are then removed from the linked list.

The linked list may contain several kinds of data items; items to be sent, items received, items sent but not confirmed at the server (which has sent the message) as received and so on. Other data that is held as part of each message part (or item) is preferably delivery time, delivery method (SMS, E-Mail etc.), number of send retries and so on.

Preferably also, the telephone holds a list of valid originators of transactions. If a transaction does not originate with an originator on that list the transaction is ignored. This greatly reduces the likelihood of E-mails (perhaps containing binary data such as programs) accidentally containing a valid identifier and being mistaken by the telephone as a message which should be extracted from the mail directory.

According to a fourth aspect of the invention, a method of transferring a digital data message between a PDA and a base station via a mobile telephone system comprises preprocessing the message to reduce the bit-width of each binary word of the message to a predetermined maximum bit-width, dividing the message into a plurality of blocks each having a predetermined maximum block size, appending information to each block to permit identification of each block and of its correct relationship to other blocks of a particular message, transmitting the blocks via a mobile telephone network, receiving the blocks and using at least the appended information, reconstructing the message from the received blocks.

This, for example, permits the inbuilt 160 character limit on messages which may be sent via the Simple Messaging System (SMS) provided by the GSM telephone standard, to be overcome. This standard also allows only printable characters (i.e. represented by only 7 bits) to be transmitted. This second limitation is overcome by the preprocessing step.

Preferably, the invention includes the step of acknowledging each received block and of retransmitting blocks which have not been acknowledged according to a predetermined acknowledgement protocol. The acknowledgement protocol may, for example, require an acknowledgement of a block to be received by the transmitter within a predetermined time period after transmission of that block.

Typically, the preprocessing step includes the addition of redundant data to permit error detection at the receiver. The preprocessing step may alternatively or in addition, include encrypting the message.

The predetermined maximum bit-width may be 7 bits (in an SMS-based system for example) and the reduced bit-width may be achieved by converting the words of the message into hexadecimal values and representing the hexadecimal values using text codes such as ASCII codes, for the characters 0 to 9 and A to F to represent the hexadecimal values 0 to F respectively.

Preferably, the appended information includes a block number unique to each respective block within a particular message and a total blocks value indicating the total number of blocks into which a particular message has been divided.

Optionally, the message may be a software update for the PDA. This could also be used to upgrade a mobile telephone's (i.e. a dedicated telephone without the extra processing power of a PDA) software.

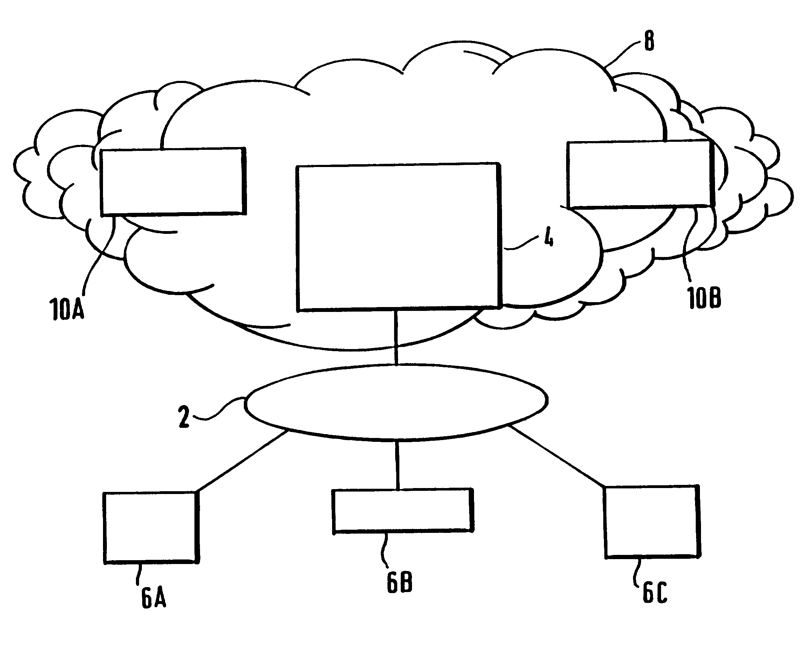

The invention will now be described, by way of example, with reference to the drawing which is a schematic block diagram of apparatus in accordance with the invention.

A gateway system 2 stands between sources of information such as stock quotes, E-mail, schedules, news and other real time information typically found on database servers 4 connected via the Internet and PDAs such as GSM PDAs 6A, modem equipped Laptops/PCs 6B and PCS PDAs 6C.

The gateway system 2 is typically distributed between one or more servers and each PDA and thus the oval 2 shown in the figure could be shown merging into the schematic information cloud 8 and the PDA boxes 6A, 6B, 6C. In the description below, it should be appreciated that the amount of processing performed by the PDA as opposed to the server to implement the gateway system may vary depending at least on the processing power of the PDA, the storage capacity of the PDA and the bandwidth of the connection between the server and the PDA.

Apparatus constructed in accordance with the invention is typically concerned with providing information to a PDA and includes the following functions; the provision of information from any database server on the Internet to a user's PDA 'on the fly', the transmission of computer programs executable on a PDA, over the SMS, the installation of those programs on the PDA without user intervention, the transmission of text messages to a PDA of unlimited length and with receipt acknowledgement, and the sending of information to a PDA without a user request for that information (although possible with a standing user request for that class of information - often called 'push' communication) and allowing a user response to that information to be returned to the sender. Typical information to be provided to the PDA is a software upgrade to the application software, or to re-configure its software in some way, Internet content such as web pages, e-mail messages containing information such as stock exchange movements and the like.

In this way, a high quality system providing a platform for radio-enable database driven applications is provided. These applications may function across disparate cellular or specialised mobile radio systems, across different territories and across a range of dissimilar end user devices. The applications may be tailored to provide fast responses to requests for narrow classes of information. A consistent user interface may be provided to server based applications which may exist anywhere on the Internet as well as human-augmented services (for instance restaurant reservations using a human operator). Each user can have an entirely different set of applications loaded and running on their PDA allowing tailoring of a service.

The platform has a consistent interface to applications in all supported territories which is independent of specific implementation details of the radio interface in those territories. The platform allows applications to commit a real time two-way interaction between end users and large data driven hosts. The platform is well suited to transaction-driven application designs. The platform uses a set of digital messaging services with a mobile telephone across the Internet which allows a continuous open channel to be maintained with each mobile end user and which also allows information to reach a roaming end user immediately without the user or his PDA needing to poll for the information.

The PDA is preferably pre-loaded with software and is prepared to receive messages from the gateway system 2 and to take certain actions when a message is received. The message need not be from an Internet server but may be from a fax store and forward service 10A or a voice message forwarding service 10B.

Software is provided in the gateway system 2 which is able to send messages via a cellular base station using the SMS system. These messages are received and interpreted by software in the PDA.

Applications running in a database 4 issue requests to the gateway system 2. The requests consist of information that needs to be delivered to the PDA user. The gateway system 2 delivers the information to the user in the best way possible at that particular moment, as will be discussed below, and the PDA sends back a reply to indicate that the data was received.

The gateway system 2 forwards this reply back to the database application 4. Either end can initiate a communication and both ends operate according to predetermined rules and expect replies for any requests made.

Before describing the functions available, it is worth reiterating the basis for some of the present limitations of communications with PDAs.

The ideal means of push communication (i.e. communication which occurs without a request being issued by the recipient) in the GSM network is the short message facility (SMS). SMS messages can be stored in the cellular provider's SMS centre until a phone comes online and retrieves the message. SMS messages can also be sent concurrently with voice and other data or fax communications, therefore not tying up the phone for the customer.

To use SMS for the present invention, its operation must be enhanced.

The biggest two limitations of SMS messages are the message size and the content format. The message size is at maximum 160 characters. Secondly, the content of a message has to consist only of printable ASCII characters.

SMS messages are 7 bit data; binary messages are not allowed.

The size limitation is overcome by splitting large requests into multiple SMS packets, where each message has a part number field and a total-parts field. That way, once all the parts of a multiple part message are received at either end the request can be reassembled. Packets also include a request ID, used when re-assembling packets.

The content limitation applies mostly to numerical data, where instead of sending a binary number such as a zero or one, the character '0' or '1' needs to be sent. In order to send binary numbers, the numbers are first converted to ASCII characters representing hexadecimal numbers, where '0' = 0, '1' = 1, '9' = 9, 'A' = 10, B = '11' and so on.

Two ASCII bytes ('FF' or 255) is more than enough space for binary numbers, since they are mostly used to indicate the length of a field inside an SMS message. (As noted, since SMS messages are limited to 160 bytes, the content of any field embedded in a message has to be less than the size of the packet, given the message format specified in a section below.) In special cases, other bases such as base 32 may be used to specify the length of a very large message that has been split over several SMS packets.

Another limitation on message size is due to the need for an application signature. Messages bound for server applications can use all 160 characters for their content (including required headers). Data bound for a PDA, however, requires a special signature at the beginning of a packet in order to route the SMS message to the gateway system code inside the PDA. Because of this, messages originating in server applications can only use 160 characters less the length of the signature (typically a total of 148 characters are available).

The gateway system automatically inserts the special signature into each outbound SMS message and the signature is recognised by the PDA on receipt of the message.

On all messages the gateway system requires additional headers, including transaction IDs and packet numbers. These are discussed below. Accounting for these headers, when an application needs to send a message greater than the packet sizes described immediately above, the message needs to be split across packets.

In the preferred embodiment, on the PDA side the PDA holds a linked list of messages to it. There are two inputs to the list.

The first input is from an SMS application, which receives SMS messages and forwards them to the PDA when the required signature is recognized at the beginning of a message.

The second input is from the mail directory of the phone. Every thirty seconds the mail directory is scanned looking for items with a name that begins with a special sequence, meaning that the item is not for the user to see without intervention.

Before an item is added to the linked list, the transaction ID of the message is compared against a list of recent transactions. If the item is found in the list then this is a duplicate transaction and the item can be discarded.

The originator of the transaction is also looked for in a list of authorized transaction originators. If the originator is not part of the authorized list, the transaction is removed without any further action.

Once it is decided that the item received has not been dealt with, the number of items said to be part of the transaction is determined. If the total number of items for this transaction is one, the transaction is processed.

If there is more than one item, the linked list is scanned looking for the other parts of the transaction. A transaction is processed only after all the items have been received otherwise they are held in the list.

Once all the items in a transaction are found, the transaction is processed and the list is updated so that the last transaction is recorded. The items in the linked list are set free and any replies are sent back to the server (which sent the transaction).

The linked list contains several kinds of data items: items to be sent, items received, items sent but not confirmed at the server as received, and so on. other data that is held as part of each item is delivery time, delivery method (SMS, E-mail, etc.), send retries.

Software modules running on the PDA may be updated. The application modules are in storage. When the phone software is launched for the first time it scans its storage for any files that match a certain criteria. The specific criteria identifies those file modules and each one found is loaded into memory.

Each module contains an identification (ID). The ID is used by modules to link their functionality to other modules. Part of a module definition specifies what kind of module it is, its name, and other specifics (such as whether the module should be shown as a main program to the user, or if it is only called internally by other modules, whether its data is volatile or if it has to be saved on disk, etc).

As the modules are loaded, any specific user interface elements are created and initialised as the module specifies.

Upon receipt of a complete transaction of a given type, a module can be added, deleted or updated. A module can be added if a module with the same ID is not currently present in the application. A module can be deleted if the appropriate order is received and the module exists. A module can be updated if it already exists, meaning that the new module replaces an old one.

To delete a module the list of modules is scanned to find the appropriate one. Once the module has been found any user interface elements associated with the old module are destroyed and finally the module is removed from storage. Any direct references to the module from the main module are also removed and the user interface is updated to reflect the change.

To add a module, the module's contents are saved in storage, then any user interface elements the module has specified are created. Finally, the module is linked with the main module so that the user has access to the new functionality.

Updating a module is a two step process: the original module is first deleted (see above) and then the module is added with the new functionality.

In the case of the Nokia 9000, the phone functionality and the computer functionality are linked together via a serial bus internal to the unit. The Nokia 9000 has a programming interface to communicate commands to the phone.

Part of the information and functionality to which the phone side has access is the name of the current cell (cell broadcast information) the ability to dial numbers (start an E-mail session, make a voice call, etc.), display the signal strength of the nearest three cells (which may be used for triangulation to pinpoint the location of a user).

The method of communication between the gateway system 2 and the PDA includes the following features:

* Splitting data into multiple segments, with reassembly of packets at the destination.
* Packet reordering
* Detection and deletion of duplicate packets
* Transaction acknowledgement
* Data integrity through the use of lower level protocols.

The gateway system 2 software protocols are based on the idea of knowing multiple paths to any one destination, where there is a preferred method of data delivery and as well as one or more alternative methods. When the destination cannot be reached via the preferred method, an alternative method is selected and the data is resent. This process can be repeated many times using different delivery methods such as analogue modems, TCP/IP Internet connections, SMTP-based E-mail, SMS, fax, alphanumeric or numeric paging or additional methods as they become available.

The gateway system 2 software instead holds multiple delivery addresses for specific delivery methods and then uses them as needed to reach a destination. Delivery addresses and methods to any particular destination can be added without disrupting in-progress services. The gateway system 2 can also select different delivery methods according to other criteria, such as the user's preference, length of message, whether push communication is required, location of the user and cost of delivering the message. This will be described below.

On the server side, the gateway system 2 communicates with the server-based applications via two gateways. The first one is used by the gateway system to notify an application that data for it has been received. The second is used by an application to tell the gateway system to deliver data to a user.

Each message includes a customer number which is used to track the user. The customer number is a 10 digit ID that is programmed into the phone upon receipt of the SMS message that configures the phone software.

Since multiple databases may be communicating with the gateway system at the same time, each service provider has a range of "screen numbers" assigned to them. Upon receipt of data, the originating screen number is looked up in a list internal to the gateway system and the appropriate database gateway is given the data. The list consists of server gateway names, and the range of screen numbers assigned to them. Typically, screen numbers can range from 1 to 999.

Each application vendor is assigned screens in increments of 20. Out of their range of screen numbers, one of the numbers has to be reserved for Push messages. Push messages are used by an application to submit data to a user and prompt for a response. The reserved screen number is used for all Push messages so that the gateway system knows where to route the response.

The gateway system 2 can talk to multiple gateways simultaneously. Each gateway, upon connecting to the gateway system identifies itself as to which type of gateway it is. Typically, gateway types include Database (output from the gateway system), Database Pipe (input for the gateway system), SMS, TCP, Mail, Pager, Alpha-Pager, and Fax.

Upon opening a connection with the gateway system, the source address of the gateway is compared against a list of valid clients. Invalid connections are closed immediately.

Once a valid gateway connects to the gateway system, input is taken from and forwarded to the gateway as the gateway system 2 deems necessary. There are two special cases of Gateway connections:

The first special case are database server gateways, which receive data only when data has been received from a screen number owned by them, as discussed previously.

The second case involve SMS gateways, which are assigned a name and a range of country and city codes they can service. This is due to the problem of cellular providers not always forwarding SMS messages between themselves. When an SMS packet is due out, the SMS gateway list is searched for the appropriate gateway and the data delivered. The list provides for alternate routes and also for gateways that service multiple areas. It can be updated by the network operations group to handle real time SMS outages. The gateway system will receive an incoming message and make any necessary alterations to its format for it to be forwarded to the user by whichever delivery method is selected.

Although the gateway system tries not to look at the data in a message, it has to look at messages in order to see message replies. The gateway system 2 keeps a queue of messages that have been sent but not acknowledged, as well as their contact methods. If a message is not acknowledged within a certain period, the message may be resent using a different method. It is for this reason that the gateway system needs to look at messages: when a message reply is received, the original request has to be deleted from the message queue.

The software in the PDA typically keeps a list of up to 20 recent requests received, to avoid responding to a request twice that had been sent via multiple communication methods. On the server side, the database application should keep track of requests made and their replies so that duplicate messages are ignored.

A worst case example is described in the following paragraph.

If a message sent via SMS is not acknowledged because a user's PDA is turned off, an E-mail message may be sent a few hours later with the same request. When the phone is later turned on, the software will receive and respond to the SMS request. If weeks later the user checks E-mail, he will receive a second copy of the original request. If many requests had gone through SMS in the intervening time, the original receipt copy may be purged, and the user will be presented with the old request as if it were a new request. Should the user try to respond to this request, the application sending the message would need to realize that the resultant inbound message may actually be obsolete.

When the gateway system needs to reach the user via E-mail, it uses a specific predefined user name which is coded to be recognized by the gateway system application in the PDA. Presently, the application in the phone searches the user's incoming mailbox every 30 seconds. If a message is found to have been sent by this predefined address then the message is read and parsed just as if it were an SMS message. The convenience of E-mail also means that large sets of screens in a new program load can be sent to multiple users at the same time, thus avoiding the expense of SMS (though at the cost of not being assured that the messages are received immediately).

SMS messages sent by the PDA but not acknowledged by the gateway system hub are stored in an E-mail message and sent to the hub via E-mail 4 minutes later. If a database application wishes to send a "personal" E-mail message, which contains no "code" and therefore should not be intercepted by the gateway system code in the PDA, it can send E-mail to the user as long as a different name is used.

Personal messages sent with the predefined name would be lost, since the PDA application would read them and expect SMS instructions in them. The user would never see the message intended for him or her.

The present invention preferably also permits application functionality to be programmed remotely and transmitted to a customer's phone via SMS or E-mail messages.

Preferably, certain items may be changed on a frequent basis via new configurations received via SMS. The new configurations typically include such things as a list of preferences and hints, a list of products available for purchase, and news and push information, where after recognizing the user's need for something the user interface is constructed based on parameters sent from the remote database. Most things can be downloaded to the PDA via other parameters sent in SMS messages. Using this technology, not only news, push requests, etc., can be issued but also, whole applications based on parameter lists can be created just by sending a few SMS messages with new functionality or better user interface screens.

Once the PDA application is opened, a "top list" of available functions is displayed to the user, the user chooses a function and "opens" it. Several of these functions are hard coded in the application (such as messaging). Others come from small modules stored in plain text files in the PDA itself. These modules can be upgraded, added or deleted at any time remotely via SMS messages or E-mail from the central database.

Should many users need to be upgraded, E-mail is the preferred method to send new modules, even though they only receive the new functionality the next time they check their E-mail.

The PDA application is an application running in the PDA. It has certain hard coded functionality that will always be needed (common for all users). The rest of the application would utilize the software modules described above.

A set of text files is included in the software package. These files serve as the textual description of a functional module. The modules are described via text so they can be easily upgraded, and added or deleted via simple SMS messages.

When an appropriate SMS message is received by the PDA application, the application will save a new text file in a PDA directory and the new functionality will be enabled in a few seconds.

Since a software module is created as a text-based list of items and their properties. Centrally, it can be stored for example, in a text file or a database field. It is delivered to the application in the PDA via the gateway system and saved locally in the PDA's memory.

The modules are designed to create user interface screens, receive input, and return SMS messages with the user's responses. In order to move between different screens, each screen module has an id. Items such as buttons initiate actions such as "close screen", "close screen and send SMS message", or "go to screen X".

Other user elements may include fields for text or numeric input, pop up menu selection with preset choices, on/off buttons, the module name to be shown at the top of the screen, or a list of items to be displayed. Screen modules associated with a list are marked automatically as data that has to be saved on disk (and that have Database record numbers).

Other functionality is accomplished via the news and push functions, already included in the hard-coded functionality. News allows the user to read text with a given title, and "push" adds the ability to display a list of items for the user to choose.

As described above, typically, modules are loaded from small text files that dictate the functionality of a screen. Most of these will be used for data input, where data is sent to a server database. The server may reply later via a News or Push message, or simply store the data.

In some instances, data needs to be stored and the user given the ability to recall this data, make changes to it and resubmit it. This is accomplished by associating a module with a named list. A list is used to show the user the records stored on disk, where each record has a matching database record (including a table alias).

After creating a new record, it is expected that a database record number and a table alias in the reply packet that acknowledges the data will be received. Once a valid record number and table alias are received it is used each time the data is modified or acted upon.

When a new data record is sent to a database, the database's record number and alias is internally set to all '0's since the phone does not have a way to create record numbers.

Once the application processes the request, a reply is sent containing the permanent database record number and table alias. The software in the phone then updates the data file with the real record number and table alias.

Any changes to this record use the record number for reference in the database. A potential problem exists when a user creates a record, which is temporarily set to record '0000000000' and alias '000' and before a reply is received with the real record number, the user deletes the record. This is handled as follows:

When the software in the PDA receives a reply that contains a record number and alias, it is matched with new data records in the PDA and updated. In the case where the record had already been deleted by a user (before the record had a server-assigned record number) the PDA software will reply to the database with a message indicating the record had been deleted, just as if the user deleted the record at that time. The software in the PDA actually knows what type of record it was in order to issue the appropriate delete record command for the host database.

The message consists of a header followed by data. Messages bound for PDAs are limited to 148 characters including headers (of which 129 are usable text). Messages bound for servers can be up to 160 characters (of which 141 are usable text).

SMS message = Message Header + Message Data

| Message Header | | |
|---|---|---|
| char | packetHeader[ 12]; | // app ID for PDA bound ONLY |
| | | // Provided by the gateway system |
| char | customerID[10]; | // customer ID in string format |
| char | packetType; | // type of function requested |
| char | trackingID[6]; | // 6 chars with request ID, HHMMSS used for |
| | | // keeping requests and replies in sync. |
| char | partNumber; | // message part, starts at '1' |
| char | totalParts; | // number of messages for this request |
| | | // '1' if '1', etc. |
| char | data[141 or 129]; | // 141 characters for messages to |
| | // database, 129 characters for messages | |
| | // to the PDA | |

The data portion of the message depends on the packet type. The packet type determines what kind of data follows. Below are the typical packet types supported and the data provided in each type.

A special note regarding strings: Null characters are not allowed in SMS messages. In most cases, a length field is used to note how big the next data item is. In most cases the length field will be hexadecimal.

**Messages Sent to a PDA:-**

| Packet Type | Purpose | Data format or offset in data char array |
|---|---|---|
| PushDelivery = '1', | The Push message displays a dialogue box with a title and a message given by the database application. The user is presented with a choice to dismiss the dialogue by "Cancel" or "Buy Items". The choice for buying items displays a second dialogue box, with a specific title and a list of choices. If the user confirms the selection of a choice, a message is sent back with the choice number. | |
| | | [0] screen ID, as owned by the database.<br>This is a reserved screen ID used by this specific<br>server only for Push messages. A screen with this<br>ID number must not actually exist.<br><br>part code char, followed by part length 2 hex chars<br>part data can be: Title, Message, ChoiceData,<br>ChoiceTitle, ReqNumber, End<br><br>use a maximum of 10 choice data items,<br>up to 79 chars each<br>title can be 39 chars |
| | message can be split among messages; concatenated upon receipt<br><br>End part discards the rest of a packet<br><br>length, use leading zeroes (i.e. '08' or 'FF' Max)<br><br>Part codes for SMS based Push services and News: | |
| | Title<br>Message<br>ChoiceData<br>ChoiceTitle<br>ReqNumber<br>End | '1'<br>'2'<br>'3'<br>'4'<br>'5'<br>'6' |

(continued)

| Packet Type | Purpose | Data format or offset in data char array |
|---|---|---|
| NewsDelivery = '2', | The News is used in a similar way to Push, except that the dialogue box displays a title and message with just an OK button. No further action is possible. | same as PushDelivery, but only title, end, and message apply<br><br>can be multi-part, but keep it 1-3 messages<br><br>Notice the lack of a screen ID at the beginning. |
| MessageReceipt = '3', | | This is a reply used by both sides to indicate that data was received and acknowledged. The receipt uses the same tracking ID as the original message so that the recipient can find the original message and mark it as received. Optionally, a receipt may include an database record number and table alias in the reply which is used to update the record in the phone's memory.<br>Look at tracking ID, discard packet as acknowledged<br><br>Used also for the gateway system<br><br>[0] database record number (10 chars)<br><br>the record number is returned for NEW settings. The PDA software uses the tracking ID to update the database record number in the local data files.<br><br>[10] database table alias (3 chars) |
| NewSMSServerPhoneNumber = '4', | Used to change the phone number where SMS messages from this phone go to. Can also be used to load balance among gateways or when our numbers change. | Gateway's SMS number string followed by return or newline<br><br>Example: +44468-555-1212\r |

(continued)

| Packet Type | Purpose | Data format or offset in data char array |
|---|---|---|
| SetCustomerID = '5', | Used to configure a cell phone with a given customer ID. This customer ID is used every time data is sent to us so that we know who is doing the request. It if followed by a list of SMS gateways that the PDA should accept messages from. | [0] customer ID string, 10 chars<br><br>[10] phone number list, separated by \r<br>and with no dashes in the numbers<br>Example: +44468027161\r etc. |
| SaveModule = '6', | | This packet includes an Software module in the form of a text based program. The module ID in the program itself is used to create a file where the module is stored. If a module already exists with the same ID the old |
| | one is replaced by the new one. The module is activated immediately. Replacing an existing module should be done carefully. If the module being replaced is associated with a list, data is being saved on disk. Since the data structures in memory were created to match a previous structure, the new structure may not match the old one and the software may crash the user's phone. That would be very bad. | |
| DeleteModule = '7', | This function tells the PDA software that the module with a given ID is no longer valid and should be erased. The module name is also removed immediately from the top functions list. Notice that any data associated with this module is now lost if it had been previously saved on disk. | [0] module description text.<br><br><br><br>[0] Module ID to be deleted, 3 chars decimal |
| Note: Function types '8', and '9' are reserved for internal the gateway system messaging functions. | | |
| OpenScreen = '0', | We have some information for the user which should be | |

(continued)

| Packet Type | Purpose | Data format or offset in data char array |
|---|---|---|
| | displayed using a certain screen. The contents of the screen are also updated with the following content. The content refers to the labels for pop ups, and text in items. | [0] screen ID to open, 3 chars followed by as many instances of:<br><br>fieldID (2 chars) ('99' marks end)<br>data len (2 chars hex); if zero, item is removed<br>data |
| Trigger = 'A', | The user wants something special to happen, such as a screen updated, etc. | [0] screen ID where message was sent 3 chars<br>[4] decimal message ID (2 chars) |

**Messages Sent To 'gateway system' Applications:-**

| Packet Type | Purpose | Data format or offset in data chararray |
|---|---|---|
| MessageReceipt | See above section. | |
| DeleteRecord = 'B', | Delete the record with the given id from the database. The user has deleted a record from memory. | [0] Database record id, 10 chars<br>[10] Table alias, 3 chars |
| SubmitScreen = 'C', | The user has selected a button in the PDA application that forces the contents of the screen to be sent via SMS. The contents of all input-type fields are packed in SMS messages and sent, splitting a field's content between packets if necessary. The first entry in the message is a 3 character string from the screen ID (in decimal). The screen ID has to be looked at to identify the format of the data that follows, since it is created in the order in which each item was declared in the module description program. Data is split between message boundaries if necessary. If the data already existed, it may have a database record ID and a table alias associated with it. Such data follows the screen data. | |

(continued)

| | | |
|---|---|---|
| | | Used to submit the input from a screen [0] screen ID, 3 chars decimal, followed by each input field from the screen. Depending on field type following screen order, before each field there is a one character field type. |
| | | Text input field alpha and numeric: 'T' for alpha text, 'N' for numeric length in base32 (2 chars) followed by data, |
| | | Popup choice: 'P' for popup 2 chars item selected Boolean group 'G' for group 1 char ('1'=ON, '0'=OFF) per item in defined order |
| | | Simple List 'S' for simple list 1 char selected item from list |
| RequestService = 'D' | | 10 chars database record ID (if available) and 3 for table alias This packet is sent in response to a push message, the user has chosen to buy something. |
| | | [0] screen ID used by the originating database app 3 chars, should be their reserved Push screen ID. |
| | | [3] reqNumber from original request, this is NOT the tracking ID. Up to 40 chars |
| | | [43] selection, item number selected as provided in the list of choices, zero based. |
| Submit SubmitAndWait = 'E' | | Same as SubmitScreen, but means wait for more data from this same user before taking action, since there will be more data. If more data is not sent later dismiss the request. |

References have been made above to selecting the best way of transmitting a message to a user, to converting incoming messages of one format to the appropriate format for the selected delivery method of the message, and to the criteria used for selecting the delivery method. It should be appreciated that the gateway system offers a number of means for sending messages and data. These include HTTP (Hyper Text Transmission Protocol), SMTP (Single Mail Transport Protocol), WAP (Wireless Application Protocol) and SMS (Short Message Service). Other means are also envisaged. The system delivers messages using whichever delivery method is most appropriate. For example, if the message is very long, SMS might not be appropriate since it may be necessary to send to large number of SMS messages to make up the long message. Since each SMS message is normally charged for, and the message might not need to be the subject of push communication, SMS might not be appropriate. Instead, the message might best be sent by e-mail using SMTP. Alternatively, if the user is not expected to view incoming e-mails for an extended period, push communication may be important, and SMS might then be most appropriate. Others of the delivery methods have their own advantages and disadvantages. For example, some of those delivery methods might not be available in particular geographical regions, and so would not be appropriate. If the gateway system has a record of a user's itinerary, it will deliver the information is in the appropriate delivery method. The gateway system may also carry in its memory a priority list indicating what messages are most important, and delivering them using a delivery method having higher priority, for example using push transmission. As explained above, if no acknowledgement of a message is received, the gateway system may be configured to forward the message using a different delivery method.

In addition, the gateway system, in selecting an appropriate delivery method, must configure the incoming message such that it is in an acceptable format for the chosen method of delivering the message. This is even necessary where SMS is used by the originator of the message on one network to be delivered to the user on a different network since there is no common format for SMS. Such conversion of formats is necessary to ensure that the user receives a comprehendible message. This conversion may be recorded in a database log of conversion operations. This is particularly useful in calculating the charges associated with the transmission of such messages based on the logged conversion operations since there is no effective cross charging scheme in place whereby users of one network can be reliably charged and billed for SMS messages that they send to a network other than their own. This gateway system sits in the middle of all of the networks and acts as a messaging hub that can route messages effectively between each host via the network operators. It can provide audited logs and billing information, something that the operators cannot themselves do. In addition, messages in formats of different delivery methods are normally incompatible, so that an SMS message cannot normally be delivered by e-mail. However, this gateway system allows users to send other users urgent messages that are sent to both the recipient SMS number as well as their conventional e-mail address. The SMS message might consists only of the e-mail subject and sender's name, or other brief details such as a title or abstract. The advantage of sending a brief message by SMS as well as by e-mail is that the recipient is alerted by push communication to retrieve the e-mail in the normal fashion.

As a result of the ability to send messages to a user in any of a number of delivery methods, the system can include a cost calculator for calculating the cost of directing a message by each available method. Where appropriate, the least cost delivery method can be used for that message. Sending any electronic message by whatever means has an inherent cost. For example, for e-mail there is the cost of connecting to an internet backbone by ISDN or leased line, and for SMS there is the cost charged by the operator connecting to and using its SMS centre. It is usually substantially cheaper to send e-mail than it is to send an SMS message. However, for mobile users, a mobile phone is more likely to be carried than an e-mail terminal. An e-mail will only be read by a user once there their e-mail terminal is switched on.

The gateway system provides a weighting for individual messages depending on their content so that more important or urgent messages have a heavy weighting to allow them to be sent by SMS. Less urgent information would normally forwarded by e-mail. The system may decide that for messages greater than a particular number of characters in length, e-mail will be used in preference to SMS, and this decision will be made based on the costing of each route as well as the importance weighting for each transmission method. The cost of transmitting a message will normally be based on the number of characters in that message, but could be based on other parameters of the message. This parameter will need to be assessed by a message assessment means before a choice is made concerning the delivery method. A priority assessor would also be required to assess the priority of a message if a message's priority is to be taken account of in the choice of delivery method.

The system includes a cost table which determines the cost of transmitting and receiving data and compares this with the cost of using other media. The end user will normally determine what level the costs should be set. For example, a customer may decide that a message of normal priority should be delivered by SMS provided that the cost is less than forty pence, unless the message is of high priority in which case it may be set at any cost. In addition, the routing of a message may be determined in a number of different ways, for example if a voice call is made from the UK to the US, the system would relay the transmission to a gateway system in the US which would then deliver the message in the appropriate way, normally at least cost.

As regards converting messages from one media to another, this is done by converting the original message into CMF format (common messaging format) which is then converted into the format for the outgoing message which will be delivered. All internal communications will be done in CMF which is converted by the gateways to the appropriate delivery format on forwarding.

**Claims**

1. A method of altering software in a PDA comprising receiving at the PDA a software module via a text data transmission, the transmission including an identifier unique to the module, extracting the identifier from the message, comparing the identifier with the identifiers of modules already present in the PDA, and if a module having the received identifier is already present, deleting the existing module from memory having that identifier and replacing that module in memory with the received module.

2. A method according to claim 1, wherein if a module having the received identifier is not already present, adding a new module to the PDA based on the received module.

3. A method according to claim 1 or claim 2, wherein the module is received in several parts and the PDA is arranged to acknowledge receipt of each part, to correctly order each part in relation to the other parts, and to request retransmission of missing parts.

4. A method according to any one of claims 1 to 3, wherein the module is received in several parts, and the PDA is arranged to prevent loading of the module into memory until all parts of the module have been received.

5. Apparatus for directing electronic messages comprising control means, database means and message direction means, the database means being arranged to store a plurality of method records for a respective user, each such record being associated with a particular method of contacting the user and each including contact data, the control means being arranged to identify an incoming message as being for a particular user, choose a method record for that user, access the contact data of that method record and cause the message direction means to direct the incoming message to the user via the chosen method of contacting the user and in the message format specified in the contact data.

6. Apparatus according to claim 5, wherein the message direction means is arranged to direct messages by at least one suitable internet protocol.

7. Apparatus according to claim 5 or 6, wherein the message direction means is arranged to direct messages by at least one of: HTTP (Hypertext Transmission Protocol); SMTP (Simple Mail Transport Protocol); WAP (Wireless Application Protocol); and SMS (Short Message Service).

8. Apparatus according to any one of claims 5 to 7, further comprising a message converter arranged to convert an incoming message into a message format appropriate to the chosen method of contacting the user.

9. Apparatus according to claim 8, wherein the message converter is arranged to convert an incoming message of a first format into an outgoing message of a second, different, format.

10. Apparatus according to claim 8 or 9, further comprising a log for recording conversion operations of the message converter.

11. Apparatus according to claim 10, wherein the log is arranged to record parameters relating to conversion operations and to calculate charges associated with the conversion operations on the basis of the recorded parameters.

12. Apparatus according to any one of claims 5 to 11, wherein the control means is arranged to choose a method record according to itinerary information held in the database means which maps method records for a particular user to predetermined respective days and/or times of the day.

13. Apparatus according to any one of claims 5 to 12, wherein the control means is arranged to choose method records according to a predetermined priority designation which orders the method records of a particular user into a priority-ordered list, a subsequently listed method record being chosen if the contact method specified in the previously listed method record fails to permit contact to be made with the user.

14. Apparatus according to claim 13, wherein the control means is arranged to identify an incoming acknowledgement of a previously directed message and to delete the message from a message queue so that no further attempts are made to direct the message to the user.

15. Apparatus according to any one of the claims 5 to 14, wherein the control means includes a cost calculator arranged to calculate the cost of directing a message by each available method, whereby the control means chooses the least cost method record for that message.

16. Apparatus according to any one of claims 5 to 15, wherein the control means includes means for assessing one or more parameters of the message and chooses an appropriate method record on that basis.

17. Apparatus according to any one of claims 5 to 16, wherein the control means includes a priority assessor for assessing the priority of the message and chooses an appropriate method record on that basis.

18. Apparatus according to any one of claims 5 to 17, wherein the control means is arranged to choose an SMS method record for the directing of an abstract or title of the message, and a different method record for the directing of all, or substantially all, of the message.

19. A method for directing electronic messages comprising:

storing a plurality of method records for a respective user, each such record being associated with a particular method of contacting the user and each including contact data;
identifying an incoming message as being for a particular user;
choosing a method record for that user;
accessing the contact data of that method record; and
causing the message to be directed to the user via the chosen method of contacting the user and in the message format specified in the contact data.

20. A method according to claim 19 further comprising the direction of messages by at least one suitable internet protocol.

21. A method according to claim 19 or 20, wherein messages are directed by at least one of HTTP; SMTP; WAP; and SMS.

22. A method according to any one of claims 19 to 21, further comprising converting an incoming message into a message format appropriate to the chosen method of contacting the user.

23. A method according to claim 22, further comprising the recording of the conversion of messages.

24. A method according to claim 23, further comprising the calculation of charges associated with the conversion of messages on the basis of the recorded conversion of the messages.

25. A method according to any one of claims 19 to 24, further comprising the choosing of a method record according to itinerary information which maps records for a particular user to predetermined respective days and/or times of the day.

26. A method according to any one of claims 19 to 25, further comprising the choosing of method records according to a predetermined priority designation which orders the method records of a particular user into a priority ordered list.

27. A method according to claim 26, further comprising the identification of an incoming acknowledgement of a previously directed message; and deletion of the message from a message queue so that no further attempts are made to direct the message to the user.

28. A method according to any one of claims 19 to 27, further comprising the calculation of the cost of directing a message by each available method, and subsequently choosing the least cost method record for that message.

29. A method according to any of claims 19 to 28, further comprising the choosing of an SMS method record for the directing of an abstract or title of the message, and a different method record for the directing of all, or substantially all, of the message.

30. A method of intercepting E-mail messages received by a PDA comprising periodically reading a mail directory of the PDA containing received E-mail messages, searching for a unique identifier in the read messages, and for each read message which contains the identifier removing that message from the list so that it is not seen by the PDA user.

31. A method according to claim 30, wherein the identifier of the removed message is compared with a list of recently received identifiers and if a match is found the message related to that identifier is deleted.

32. A method according to claim 31, wherein if a match is not found, the message relating to the identifier is added to a linked list of messages and a part number value of the message is examined which part number identifies the order and total number of message parts which form a complete transaction, if the complete transaction is contained in the linked list, the messages are ordered to form the complete transaction and the transaction is processed, the transaction parts are then removed from the linked list.

33. A method of transferring a digital data message between a PDA and a base station via a mobile telephone system comprising, dividing the message into a plurality of blocks each having a predetermined maximum block size, appending information to each block to permit identification of each block and of its correct relationship to other blocks of a particular message, transmitting the blocks via a mobile telephone network, receiving the blocks and using at least the appended information, reconstructing the message from the received blocks.

34. A method according to claim 33, wherein the message contains a software update for the mobile telephone in a text format.